# EUROPÄISCHE PATENTSCHRIFT

(11) **EP 3 987 908 B1**
(45) Veröffentlichungstag und Bekanntmachung des Hinweises auf die Patenterteilung: **11.12.2024**
(21) Anmeldenummer: 21195457.3
(22) Anmeldetag: 08.09.2021
(51) Int. Cl.: A01D 41/127

(54) **ERNTEMASCHINE ZUR GLEICHZEITIGEN AUSBRINGUNG VON ZWEI PRÜFSCHALEN FÜR DIE KORNVERLUSTMESSUNG**
HARVESTER FOR SIMULTANEOUSLY DEPOSITING TWO GRAIN COLLECTING PANS FOR CORN LOSS DETERMINATION
RÉCOLTEUSE POUR SIMULTANÉMENT DÉPOSER DEUX COLLECTEUR DE GRAIN POUR LA DÉTERMINATION DE PERTE DE GRAIN

(30) Priorität: 26.10.2020 DE 102020128108
(43) Veröffentlichungstag der Anmeldung: 27.04.2022
(73) Patentinhaber: CLAAS Selbstfahrende Erntemaschinen GmbH, 33428 Harsewinkel (DE)
(72) Erfinder: Baumgarten, Joachim, 48361 Beelen (DE); Schilder, Frank, 33604 Bielefeld (DE); Bormann, Bastian, 33334 Gütersloh (DE); Dieckmeyer, Sascha, 49326 Melle (DE)
(74) Vertreter: CLAAS Gruppe

(56) Entgegenhaltungen:
- EP-A1- 3 056 076
- US-A1- 2011 130 180
- US-A1- 2020 029 499

## Beschreibung

Die vorliegende Erfindung betrifft eine Erntemaschine, insbesondere einen Mähdrescher, gemäß dem Oberbegriff des Anspruches 1.

Aus der DE 101 50 080 A1 ist eine Erntemaschine mit einer Ablagevorrichtung gemäß dem Oberbegriff des Anspruches 1 bekannt. Die Ablagevorrichtung ist zur Aufnahme einer einzelnen Prüfschale eingerichtet, die fernausgelöst auf dem Boden abgelegt werden kann. Hierzu sind an der als Mähdrescher ausgeführten Erntemaschine im rückwärtigen Bereich des Schneidwerks zwei einen L-förmiges Profil aufweisende Führungsschienen zur Horizontalen geneigt angeordnet, die der Aufnahme der einzelnen Prüfschale dienen. Die Prüfschale wird in den Führungsschienen mittels eines daran angeordneten federbelasteten Mechanismus gehalten, bis durch eine manuelle oder automatische Betätigung des Mechanismus die Prüfschale schwerkraftbedingt auf den Boden gleitet. Die Prüfschale umfasst ein kastenförmiges Behältnis, in welchem ein auswechselbares Sieb angeordnet ist. Durch den Einsatz von Sieben mit unterschiedlicher Öffnungsweite lässt sich die Prüfschale für verschiedene Fruchtarten verwenden, um tatsächliche Erntegutverluste respektive Kornverluste zu bestimmen. Für das Ausbringen mehrerer Prüfschalen sieht die DE 101 50 080 A1 vor, mehrere Ablagevorrichtungen mit jeweils einer Prüfschale an der Erntemaschine anzuordnen.

Aus der US 4,393,704 A oder US2020/029499A1 ist eine Erntemaschine mit einer Ablagevorrichtung gemäß dem Oberbegriff des Anspruches 1 bekannt, welche der Ablage einer einzelnen Prüfschale zwischen den Rädern der Erntemaschine dient.

Um die Genauigkeit der Bestimmung der Erntegutverluste, d.h. der Kornverluste, zu erhöhen, ist es erforderlich, an mehreren Stellen eines Feldes die Erntegutverluste mittels der Prüfschale zu bestimmen. Prozessbedingt sind die Erntegutverluste aufgrund der Ablage von Erntegut durch die Erntemaschine nicht gleichmäßig verteilt, sondern unterliegen in Abhängigkeit von der Gleichmäßigkeit der Bestandsdichte mehr oder weniger großen Streuungen. Die Bestimmung der Erntegutverluste dient der Kalibrierung von Kornverlustsensoren an der Erntemaschine. Die von den Kornverlustsensoren generierten Sensor-Kornverlustsignale für Erntegutverluste werden zur Einstellung von Arbeitsaggregaten der Erntemaschine herangezogen, um dadurch die Erntegutverluste unterhalb einstellbarer Grenzwerte zu halten und zugleich eine möglichst hohe Auslastung bzw. einen maximalen Durchsatz am Erntegut zu erreichen.

Vor diesem Hintergrund ist es die Aufgabe der vorliegenden Erfindung, eine Erntemaschine gemäß dem Oberbegriff des Anspruches 1 derart weiterzubilden, dass eine höhere Genauigkeit bei der Erntegutverlustbestimmung, insbesondere auf Feldern mit inhomogenen Erntegutbestand, und zugleich eine Vereinfachung hinsichtlich der Ablage der Prüfschale erreicht wird.

Diese Aufgabe wird durch eine Ablagevorrichtung mit den Merkmalen des Oberbegriffs des Anspruches 1 in Verbindung mit den kennzeichnenden Merkmalen des Anspruches 1 gelöst.

Vorteilhafte Weiterbildungen sind Gegenstand der Unteransprüche.

Gemäß dem Anspruch 1 wird eine Erntemaschine, insbesondere ein Mähdrescher, vorgeschlagen, umfassend eine Ablagevorrichtung mit einem Auswurfmechanismus zur Ablage einer Prüfschale zur Bestimmung von Erntegutverlusten auf dem von der Erntemaschine überfahrenen Boden, wobei der Auswurfmechanismus dazu eingerichtet ist, jeweils zwei Prüfschalen aus zwei nebeneinander in der Ablagevorrichtung angeordneten Stapeln von Prüfschalen gleichzeitig auf dem Boden abzulegen. Insbesondere ist die Ablagevorrichtung quer zur Fahrtrichtung der Erntemaschine orientiert. Hierdurch ist gewährleistet, dass die Arbeitsorganbreite der Erntemaschine bei der Aufnahme des hinsichtlich der tatsächlichen Erntegutverlauste auszuwertenden Erntegutes vollständig abgedeckt ist.

Besonders vorteilhaft ist es, wenn die Erntemaschine eine Steuerungsvorrichtung aufweist, die dazu eingerichtet ist, die Ablagevorrichtung zur gleichzeitigen paarweisen Ablage von Prüfschalen in vorbestimmten oder vorgebbaren Abständen anzusteuern. Dabei kann die Ablage automatisch in, insbesondere gleichen, Abständen erfolgen, wobei der oder die Abstände in einer Speichereinheit der Steuerungsvorrichtung abrufbar hinterlegbar sind. Alternativ kann vorgesehen sein, die Abstände individuell anzupassen, was bei inhomogenen Feldbeständen sinnvoll sein kann. Dabei kann beim Ernten eines inhomogenen Feldbestandes vorgesehen sein, dass die Bedienperson die Ablage der Prüfschalen durch die Ablagevorrichtung mittels der Steuerungsvorrichtung manuell auslöst, um die Ablage der Prüfschalen an verschiedenen Stellen, d.h. sowohl mit unterschiedlichen Abständen innerhalb einer Fahrspur hintereinander als auch verteilt über mehrere Fahrspuren, auf dem Boden durchzuführen.

Erfindungsgemäß weist der Auswurfmechanismus ein Rahmengestell auf, welches zur übereinander gestapelten Aufnahme von zumindest zwei Paaren Prüfschalen eingerichtet ist. Es werden somit mehrere Prüfschalen, vorzugsweise drei bis fünf Prüfschalen, gestapelt, d.h. übereinander, in der Ablagevorrichtung angeordnet, welche paarweise sequentiell auf dem Boden abgelegt werden.

Insbesondere kann das Rahmengestell einander gegenüberliegend angeordnete Führungsschienen sowie parallel und relativbeweglich zu den Führungsschienen angeordnete Auswurfschienen umfassen, wobei die Auswurfschienen zur, insbesondere paarweisen, Führung und Vereinzelung der Prüfschalen durch zumindest eine Antriebsvorrichtung oszillierend angetrieben sind. Das Rahmengestell mit seinen Führungsschienen und den hierzu relativbeweglichen und oszillierend angetriebenen Auswurfschienen bildet den Auswurfmechanismus. Mittels des Auswurfmechanismus können die Prüfschalen jeweils paarweise vereinzelt, geführt und ausgeworfen werden.

Dazu können an einander zugewandten vertikal verlaufenden Innenseiten der Auswurfschienen mehrere sich in horizontaler Richtung erstreckende Abkantungen ausgebildet sein, wobei jede Abkantung eine untere Schenkelebene und eine obere Schenkelebene aufweist, die durch einen rampenförmigen Abschnitt miteinander verbunden sind, und wobei zwischen in Längsrichtung der Auswurfschienen hintereinander angeordneten Abkantungen sich zwischen der oberen Schenkelebene einer Abkantung und der unteren Schenkelebene einer nachfolgenden Abkantung jeweils ein Spalt ausbildet. Dabei sind die drei Abkantungen, die untere Schenkelebene, der rampenförmige Abschnitt und die obere Schenkelebene, in einer sich wiederholenden Abfolge in Längsrichtung der Auswurfschiene angeordnet. Die zuunterst liegende Prüfschale eines Stapels von mehreren in der Ablagevorrichtung übereinanderliegenden Prüfschalen liegt mit ihren Laschen auf Höhe des Spalts.

Weiterhin kann die jeweilige Prüfschale beidseitig an einem Außenrahmen angeordnete Laschen aufweisen, wobei die Laschen der innerhalb eines Stapels zuunterst liegenden Prüfschale während einer oszillierenden Bewegung der Auswurfschienen in Längsrichtung auf den Abkantungen der Auswurfschienen aufliegen und von diesen geführt sind.

Die zuunterst liegende Prüfschale eines Stapels von mehreren in der Ablagevorrichtung übereinanderliegenden Prüfschalen liegt mit ihren Laschen im Wesentlichen auf Höhe des Spalts. Durch die in einem ersten Bewegungszyklus ausgeführte Vorwärtsbewegung schiebt sich die jeweilige obere Schenkelebene zwischen die Laschen der zuunterst liegenden Prüfschale und der darüber befindlichen Prüfschale. Dabei sind die in einer Ebene der Ablagevorrichtung nebeneinanderliegenden Prüfschalen durch Rahmenelemente der Ablagevorrichtung in axialer Richtung fixiert. Durch die im ersten Bewegungszyklus nachfolgende ausgeführte Zurückbewegung gelangt die zuunterst liegende Prüfschale auf die untere Schenkelebene der Auswurfschienen. Mit dem Ausführen einer erneuten Vorwärtsbewegung der Auswurfschienen im nachfolgenden Bewegungszyklus gleiten die Laschen auf der unteren Schenkelebene in Richtung des Spalts und fallen auf den Boden. Zugleich wird in diesem Bewegungszyklus eine erneute Vereinzelung der in vertikaler Richtung gesehen nachfolgenden Prüfschale durchgeführt. Die jeweilige Prüfschale ist durch die beidseitig an dem Außenrahmen angeordnete Laschen, die während einer oszillierenden Bewegung der Auswurfschienen in Längsrichtung auf den Abkantungen der Auswurfschienen zumindest abschnittsweise aufliegen, von den Abkantungen geführt.

Vorzugsweise können die Auswurfschienen durch einen Koppelmechanismus mit der Antriebsvorrichtung verbunden sein, um die oszillierende Bewegung der Auswurfschienen zu synchronisieren. Dadurch kann vermieden werden, dass es zu einem Verkanten der Prüfschalen während der Vereinzelung und des Ablegens durch den Auswurfmechanismus kommt. Der Koppelmechanismus kann jeweils einen Exzenter und eine Koppelstange umfassen, die mit einer der Auswurfschienen verbunden sind. Die Exzenter und Koppelstangen einer jeweiligen Auswurfschiene sind durch eine querverlaufende Achse miteinander verbunden, an der die Exzenter und Koppelstangen drehbar gelagert sind. Eine von der Antriebsvorrichtung auf einen der Exzenter übertragene Drehbewegung wird von der Achse auf den Exzenter und die Koppelstange der gegenüberliegenden Auswurfschiene übertragen.

Des Weiteren kann die jeweilige Auswurfschiene in der parallel zu dieser verlaufenden Führungsschiene durch zumindest zwei an der jeweiligen Auswurfschiene angeordnete Führungsmittel axial geführt sein. Die jeweilige Führungsschiene kann vorzugsweise als ein C-Profil ausgeführt sein, wodurch die Führungsmittel in Querrichtung und Hochrichtung gehalten werden. Die Führungsmittel können Gleit- oder Rollelemente aufweisen, mit denen die jeweilige Auswurfschiene in der Führschiene relativ zu dieser beweglich geführt ist. Das jeweilige Führungsmittel kann durch ein an der Auswurfschiene befestigtes Hutprofil zur Aufnahme der Gleit- oder Rollelemente angeordnet sein, wobei die Gleit- oder Rollelemente ihrerseits in der Führungsschiene formschlüssig geführt bzw. beweglich sind. In Längsrichtung der jeweiligen Auswurfschiene gesehen sind jeweils mehrere Führungsmittel zueinander beabstandet angeordnet, um eine verkantungsfreie Führung der Auswurfschienen sicherzustellen.

Bevorzugt kann eine Abwurfstelle der paarweise abgelegten Prüfschalen physisch und/oder elektronisch markierbar sein. Eine physische Markierung kann beispielsweise durch das Ausbringen von Schaum oder Farbe erfolgen. Hierzu kann die Ablagevorrichtung oder der Mähdrescher eine geeignete Austragvorrichtung aufweisen, die zur Ausbringung von Schaum oder Farbe eingerichtet ist. Die Ansteuerung der Austragvorrichtung kann durch die Steuerungsvorrichtung erfolgen. Eine elektronische Markierung kann beispielsweise durch das Abspeichern von Positionsdaten der Erntemaschine im Zeitpunkt der Ablage in einer Speichereinheit der Steuervorrichtung, welche vorzugsweise auf der Erntemaschine angeordnet ist, erfolgen. Die Positionsdaten können der Erntemaschine von einem Positionsortungssystem bereitgestellt werden. Zudem können die Positionsdaten an eine mobile Datenverarbeitungseinrichtung übertragen werden, wie beispielsweise ein Smartphone, ein Tablet-PC oder dergleichen. Weiterhin kann eine elektronische Markierung auf einer in der Steuerungsvorrichtung elektronisch hinterlegten Karte des zu bearbeitenden Feldes erfolgen. Die Alternativ oder zusätzlich kann jede Prüfschale mit einem Sender ausgeführt sein, der beispielsweise auf Bluetooth-Basis funktioniert, dessen Signale durch eine mobile Datenverarbeitungseinrichtung detektierbar sind, um die Lage der jeweiligen Prüfschale zu orten.

Als Arbeitsorgane kann die Erntemaschine eine Abscheideanordnung sowie eine Reinigungsanordnung aufweisen, wobei an den gutabgabeseitigen Enden der Abscheideanordnung sowie der Reinigungsanordnung jeweils zumindest ein Kornverlustsensor angeordnet ist, welche Sensor-Kornverlustsignale an die Steuerungsvorrichtung zur relativen Bestimmung von Erntegutverlusten übermitteln.

Insbesondere kann die Steuerungsvorrichtung dazu eingerichtet sein, für eine Durchführung einer Kalibrierung der Kornverlustsensoren die Ablagevorrichtung zur automatischen Ablage der Prüfschalen auf dem Boden in Abhängigkeit vom Erreichen eines quasistationären Betriebszustands der Erntemaschine, in welchem die Erntemaschine einen im Wesentlichen konstanten Durchsatz an Erntegut aufweist, vorzunehmen. Für die Durchführung der Kalibrierung der Kornverlustsensoren werden die tatsächlich auftretenden Erntegutverluste anhand einer durchzuführenden Auswertung des Inhalts von der Erntemaschine der abgelegten und überfahrenen Prüfschalen bestimmt.

Bevorzugt kann die Steuerungsvorrichtung dazu eingerichtet sein, eine Änderung von Betriebsparametern nach Erreichen des quasistationären Betriebszustands für die Dauer der Ablage der Prüfschalen zu unterbinden und mittels einer Eingabe-Ausgabeeinheit einen Hinweis auszugeben, dass durch die Steuerungsvorrichtung eine Änderung der Betriebsparameter temporär verhindert wird. Auf diese Weise kann vermieden werden, dass eine manuelle oder automatische Änderung eines oder mehrerer Betriebsparameter zu einer Abweichung der Bestimmung der Kornverluste mittels der Prüfschalen führen. Betriebsparameter sind beispielsweise die Fahrgeschwindigkeit der Erntemaschine sowie insbesondere automatische oder manuelle Einstellungen der Dreschanordnung, der Abscheideanordnung und/oder der Reinigungsanordnung, die zu einer Änderung des Erntegutdurchsatzes und/oder einer Erhöhung der Erntegutverluste führen können.

Zudem kann die Steuerungsvorrichtung dazu eingerichtet sein, die von den Kornverlustsensoren erfassten Sensor-Kornverlustsignale im Zeitpunkt der jeweiligen Ablage der Prüfschalen abzuspeichern.

Bevorzugt kann die Einstellung der Empfindlichkeit der Kornverlustsensoren nach Empfang der tatsächlichen Erntegutverluste manuell durch die Bedienperson der Erntemaschine oder automatisch durch die Steuerungsvorrichtung durchführbar sein.

Hierzu können die mittels der Auswertung der aufgenommenen Inhalte der Prüfschalen bestimmten tatsächlichen Erntegutverluste manuell mittels der Eingabe-Ausgabe-Einheit oder von einer, insbesondere mobilen, Datenverarbeitungsvorrichtung an die Steuerungsvorrichtung übermittelt werden. Vorteilhafter ist die direkte Übermittlung der bestimmten tatsächlichen Erntegutverluste durch die Datenverarbeitungsvorrichtung. Hierdurch lassen sich Übermittlungsfehler vermeiden.

Die vorliegende Erfindung wird nachstehend anhand eines in den Zeichnungen dargestellten Ausführungsbeispieles näher erläutert.

Es zeigen:
- Fig. 1: ein Mähdrescher in einer schematischen Seitenansicht;
- Fig. 2: schematisch eine perspektivische Ansicht einer Ablagevorrichtung für Prüfschalen;
- Fig. 3: eine schematische Ansicht einer Prüfschale von oben sowie eine Detailansicht im Schnitt;
- Fig. 4: schematisch eine perspektivische Teilansicht einer Rückwand sowie einer Auswurfschiene mit einem daran angeordneten Führungsmittel;
- Fig. 5: schematisch eine rückwärtige Teilansicht gemäß Fig. 4;
- Fig. 6: eine schematische Teilansicht der Innenseite der Auswurfschiene;
- Fig. 7: schematisch eine perspektivische Teilansicht eines Koppelmechanismus zum Antreiben der Auswurfschienen; und
- Fig. 8: eine schematische Teilansicht von mehreren übereinanderliegenden Prüfschalen.

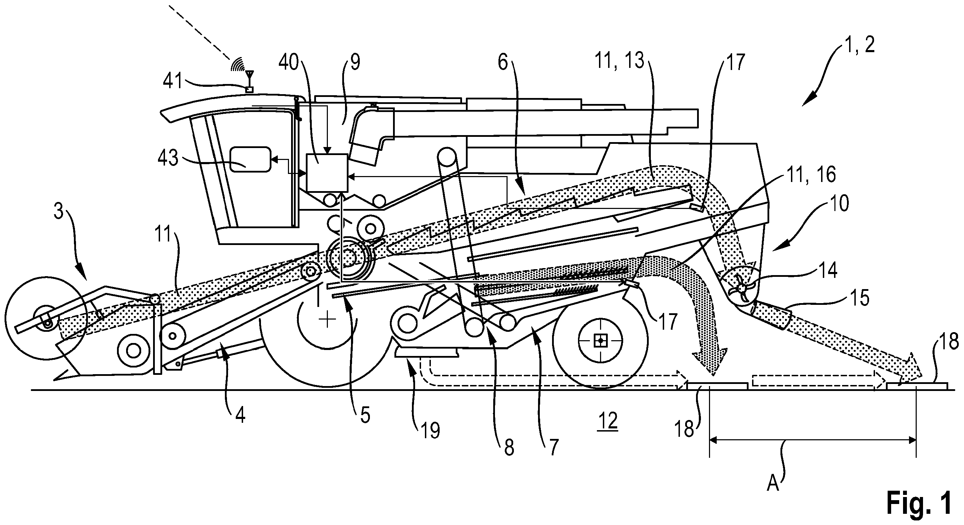

In Fig. 1 ist eine als Mähdrescher 2 ausgeführte Erntemaschine 1 in einer schematischen Seitenansicht dargestellt. Der Mähdrescher 2 weist in an sich aus dem Stand der Technik bekannter Weise ein Schneidwerk 3, einen Schrägförderer 4, eine Dreschanordnung 5, eine Abscheideanordnung 6, eine Reinigungsanordnung 7, eine Transportanordnung 8, einen Korntank 9 und eine Verteilanordnung 10 auf. Ein durch das Schneidwerk 3 aufgenommener Erntegutstrom bzw. Korngutstrom 11, welcher Kornbestandteile und Nichtkornbestandteile, wie Spreu und Stroh, umfasst, wird durch diese Abschnitte des Mähdreschers 2 prozesstechnisch im Wesentlichen in der genannten Reihenfolge gefördert und von den auch als Arbeitsorgane bezeichneten Anordnungen bearbeitet.

Genauer gesagt sollen in der Dreschanordnung 5 und der Abscheideanordnung 6 die Kornbestandteile von den Nichtkornbestandteilen, d.h. dem Erntegut im Übrigen, getrennt werden, wobei die abgetrennten Kornbestandteile in der Reinigungsanordnung 7 eine Säuberung von den Nichtkornbestandteilen erfahren und anschließend die somit gereinigten Kornbestandteile mittels der Transportanordnung 8 dem Korntank 9 zugeführt werden. Die Nichtkornbestandteile, wie das Stroh und die Spreu, werden dann am Heck des Mähdreschers 2 von der Verteilanordnung 10 auf dem Boden 12 abgelegt bzw. treten an dem entsprechenden Ende der Abscheideanordnung 6, welche längs ausgerichtete Schüttlerhorden 6a oder Abscheiderotoren umfassen kann, aus dem Mähdrescher 2 und gelangen auf den Boden 12 des Feldes.

In der Dreschanordnung 5 wird der größte Teil der Kornbestandteile aus dem aufgenommenen Erntegutstrom 11 abgeschieden. Das sogenannte Restkorn und die Nichtkornbestandteile gelangen zur Abscheideanordnung 6, wo ein weiterer Trennprozess stattfindet, um das Restkorn weitgehend von den Nichtkornbestandteilen im Erntegutstrom 11 abzuscheiden. Das aus der Abscheideanordnung 6 endseitig austretende Gutgemisch 13 aus nicht abgeschiedenem Restkorn und Nichtkornbestandteilen wird durch die Verteilanordnung 10, die einen Strohhäcksler 14 und hier und vorzugsweise einen Radialverteiler 15 umfasst, auf den Boden 12 zurückgebracht.

Die aus der Dreschanordnung 5 und der Abscheideanordnung 6 gewonnenen Kornbestandteile werden in einem nächsten Schritt der Reinigungsanordnung 7 zugeführt. Dabei werden durch die Kombination von Sieben und gerichteten Luftströmen weitere Nichtkornbestandteile weggeblasen. Die aus Schnecken und Elevatoren bestehende Transportanordnung 8 fördert die nun gereinigten Kornbestandteile zum Korntank 9. Von dort aus findet dann die Überladung auf einen Abfuhrwagen statt.

Abhängig von verschiedenen Faktoren wie beispielsweise der Fahrgeschwindigkeit, der Bestandsdichte und/oder der Feuchtigkeit kommt es bei diesem Mähdruschprozess zu Kornverlusten. Diese können bereits bei der Aufnahme, dem Ausdreschen in der Dreschanordnung, aber auch bei der Abscheidung in der Abscheideanordnung 6 sowie in der Reinigungsanordnung 7 auftreten. Mit dem Bezugszeichen 16 sind Erntegutverluste bzw. Kornverluste bezeichnet, die während des Reinigungsprozesses auftreten. Weitere Erntegutverluste 16 resultieren aus dem Abscheideprozess durch die Abscheideanordnung 6.

Zur Bestimmung der Erntegutverluste 16 werden zumindest zwei Kornverlustsensoren 17 eingesetzt, die zur Detektion der als Erntegutverluste 16 aus dem Mähdrescher 2 austretenden Kornbestandteile dienen. Die Positionierung der Kornverlustsensoren 17 erfolgt in bekannter Weise am Ende der Abscheideanordnung 6 und der Reinigungsanordnung 7, d.h. im Abgabebereich des im Wesentlichen aus Nichtkornbestandteilen bestehenden Erntegutstromes 11.

Die Kornverlustsensoren 17 erfassen die Erntegutverluste 16 nur anteilig, da die Kornverlustsensoren 17 nicht ohne Weiteres und direkt die quantitativ genaue Menge an Erntegutverlusten 16 erfassen können. Das liegt nicht nur daran, dass ohnehin nicht alle verlorenen Körner überhaupt in den Erfassungsbereich der Kornverlustsensoren 17 gelangen, sondern auch daran, dass der Zusammenhang zwischen den gemessenen Kornverlustwerten und der tatsächlichen Menge an verlorenen Körnern sehr unterschiedlich sein kann.

Die Kornverlustwerte werden zur Einstellung unter anderem von Arbeitsparametern der verschiedenen prozesstechnischen Anordnungen des Mähdreschers 2 herangezogen, damit die Kornverluste die agrotechnischen Forderungen nicht überschreiten und die Erntemaschine 1 respektive der Mähdrescher 2 einen maximalen Durchsatz fahren kann. Die Kornverlustwerte werden darüber hinaus auch zur Ansteuerung von weiteren Maschineneinstellung, wie des Fahrantriebs bzw. der Fahrgeschwindigkeit, herangezogen. Somit ist bei sich ändernden Erntebedingungen, wie beispielsweise der Änderung der Bestandsdichte in einem inhomogenen Feld, der Feuchtigkeit des Erntegutes, eine regelmäßige Anpassung der Arbeitsparameter und Maschineneinstellungen aufgrund der sensierten Kornverlustwerte vorzunehmen, um die Effizienz des Mähdruschprozesses stets optimal zu gestalten.

Für eine tatsächliche Bestimmung der auftretenden Erntegutverluste 16 werden auf dem Boden 12 Prüfschalen 18 abgelegt, welche den von der Reinigungsanordnung 7 sowie der Verteilanordnung 10 ausgebrachten Erntegutstrom 11 anteilig in Form der Kornverluste 16 sowie des Gutgemischs 13 aufnehmen. Die Prüfschalen 18 decken dabei näherungsweise die gesamte nutzbar Arbeitsorganbreite des Mähdreschers 2 ab. Hierzu werden jeweils zwei Prüfschalen 18 nebeneinander auf dem Boden abgelegt. Das Ablegen der Prüfschalen 18 erfolgt durch eine Ablagevorrichtung 19, welche an der Unterseite des Mähdrehscher 2 angeordnet ist. Die Ablage der Prüfschalen 18 erfolgt in einem einstellbaren Abstand A hintereinander auf dem Boden 12. Der Abstand A ist durch den zeitlichen Versatz beim Auslösen der Ablagevorrichtung 19 zur Ablage der Prüfschalen 18 einstellbar. Die Anordnung der Ablagevorrichtung 19 erfolgt quer zur Längsachse bzw. Fahrtrichtung des Mähdreschers 2.

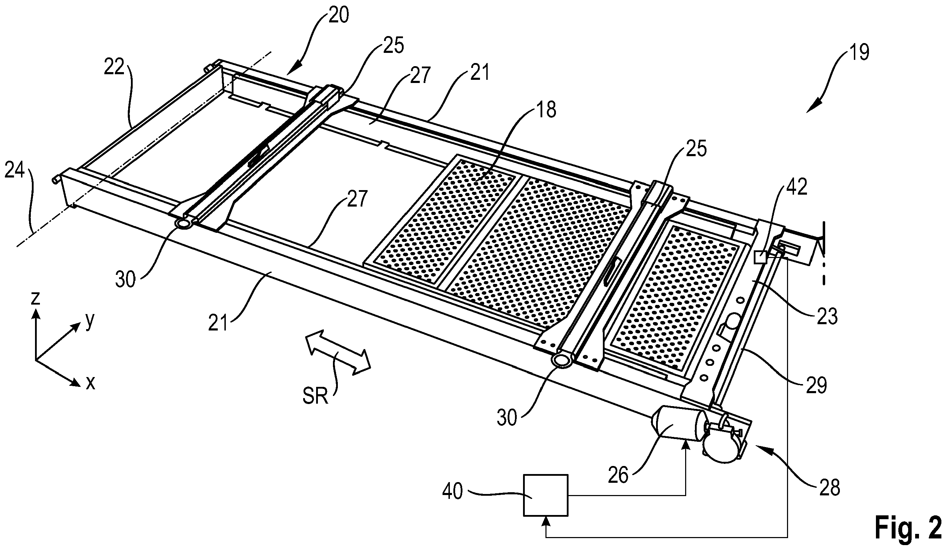

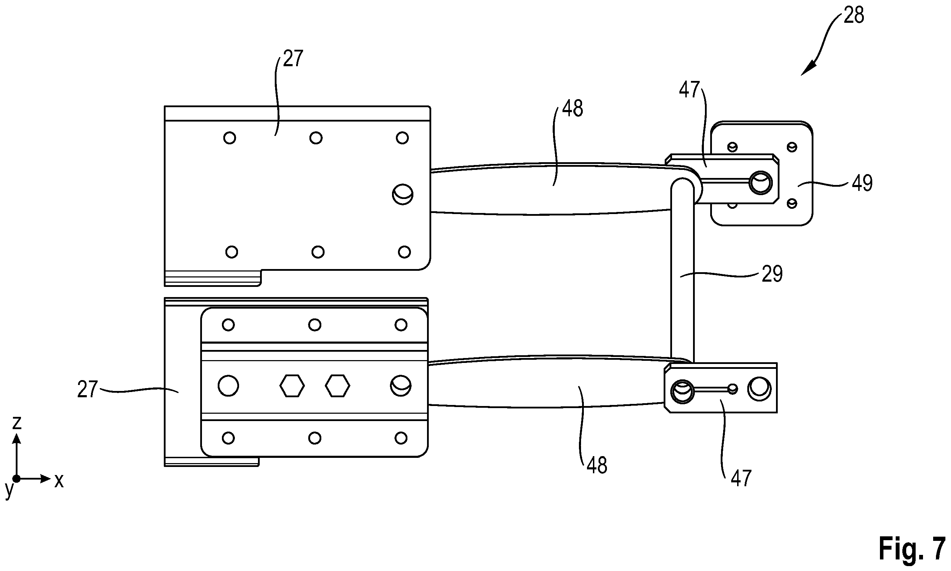

In Fig. 2 ist schematisch eine perspektivische Ansicht der Ablagevorrichtung 19 für Prüfschalen 18 gezeigt. Die Ablagevorrichtung 19 umfasst ein Rahmengestell 20, zumindest eine Antriebsvorrichtung 26 sowie einen Koppelmechanismus 28, welcher anhand der Fig. 7 noch näher erläutert wird. Die zumindest eine Antriebsvorrichtung 26 ist hier und vorzugsweise als ein Elektromotor ausgeführt. In der Darstellung ist aus Gründen der besseren Visualisierung von Komponenten der Ablagevorrichtung 19 nur eine Prüfschale 18 gezeigt. Es sind jedoch zwei Prüfschalen 18 in einer Ebene nebeneinanderliegend vorgesehen.

Das Rahmengestell 20 umfasst zwei sich in Längsrichtung x erstreckende parallele Führungsschienen 21. Endseitig sind die Führungsschienen 21 durch eine um eine Achse 24 schwenkbare Klappe 22 bzw. eine ortsfeste Rückwand 23 verbunden. Auf der Seite der Klappe 22 lassen sich mehrere übereinander gestapelte Prüfschalen 18 in die Ablagevorrichtung 19 einbringen. Die Klappe 22 ist arretierbar, um ein Herausrutschen der Prüfschalen 18 zu verhindern. Auf der Oberseite des Rahmengestells 20 sind sich in Querrichtung y erstreckende Querstreben 25 angeordnet, mit welchen die Ablagevorrichtung 19 lösbar an der Unterseite des Mähdreschers 2 befestigt ist. Das Funktionsprinzip der Anbindung an den Mähdrescher 2 beruht auf federrückgestellten Rasthaken. Durch das Ziehen an seitlich herausstehenden Betätigungselementen 30, die hier und vorzugsweise als Ringe ausgeführt sind, ist das Lösen der Ablagevorrichtung 19 möglich.

An der Innenseite der jeweiligen Führungsschiene 21 ist eine axial bewegliche Auswurfschiene 27 parallel zur jeweiligen Führungsschiene 21 verlaufend angeordnet. Die Auswurfschienen 27 sind gegenüber den Führungsschienen 21 in Längsrichtung x relativbeweglich. Die Auswurfschienen 27 sind identisch ausgeführt. Eine von der Antriebsvorrichtung 26 erzeugte Rotationsbewegung wird durch den Koppelmechanismus 28 in eine Linearbewegung überführt und auf die Auswurfschienen 27 übertragen. Hierzu umfasst der Koppelmechanismus 28 jeweils einen Exzenter 47 und eine Koppelstange 48, die in Fig. 7 näher dargestellt sind, welche mit einer der Auswurfschienen 27 verbunden sind. Der Exzenter 47 und die Koppelstange 48 einer jeweiligen Auswurfschiene 27 sind durch eine querverlaufende Achse 29 miteinander verbunden, an der die Exzenter 47 und die Koppelstangen 48 drehbar gelagert sind. Eine von der Antriebsvorrichtung 26 auf einen der Exzenter 47 an einer der Auswurfschienen 27 übertragene Drehbewegung wird von der Achse 29 auf den Exzenter 47 und die Koppelstange 48 der gegenüberliegenden Auswurfschiene 27 synchron übertragen. Somit werden die Auswurfschienen 27 durch die zumindest eine Antriebsvorrichtung 26 oszillierend in axialer Richtung der Ablagevorrichtung 19 angetrieben, was durch den Pfeil SR, der die Bewegungsrichtung darstellt, angedeutet ist. Die Auswurfschienen 27 führen dabei eine Vorwärtsbewegung und eine Zurückbewegung in Längsrichtung x, geführt durch die parallel verlaufenden Führungsschienen 21, aus.

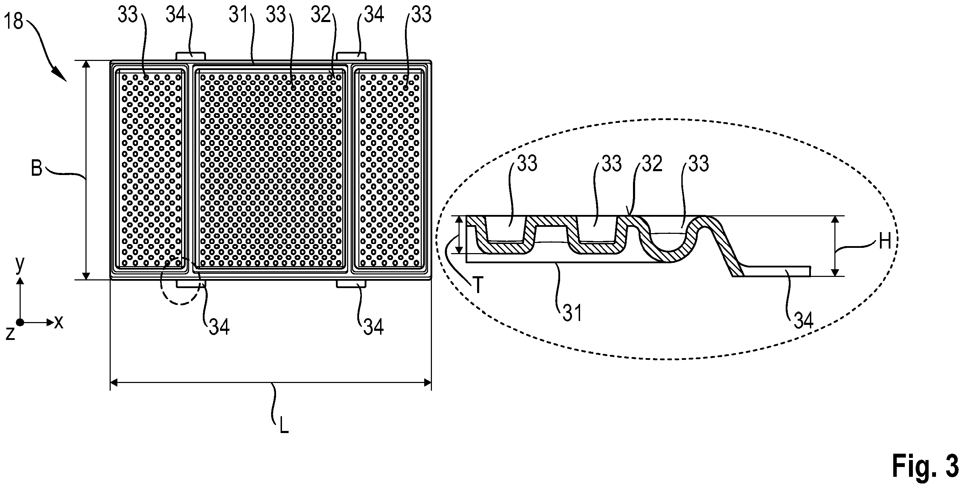

Die Darstellung in Fig. 3 zeigt eine schematische Ansicht der Prüfschale 18 von oben sowie eine Detailansicht der Prüfschale 18 im Schnitt. Die Prüfschale 18 ist im Wesentlichen quaderförmig ausgeführt und weist einen Außenrahmen 31 auf, der eine mit einer Vielzahl von Vertiefungen 33 versehene Oberfläche 32 zum anteiligen Auffangen der Bestandteile des Erntegutstromes 11 umschließt, die von der Abscheideanordnung 6 und der Reinigungsanordnung 7 aus dem Mähdrescher 2 ausgeschieden werden. Die Prüfschale 18 weist an zwei einander gegenüberliegenden Längsseiten des Außenrahmens 31 jeweils zumindest zwei axial zueinander beabstandete Laschen 34 auf.

Die Prüfschale 18 ist flach und stapelbar ausgeführt, wozu die Prüfschale 18 eine Höhe H bis zu 40 mm, insbesondere bis zu 30 mm, aufweist. Hierdurch wird eine möglichst flachbauende Ausführung der Ablagevorrichtung 19 erreicht. Für eine möglichst einfache Zuführung der Prüfschale 18 in die Ablagevorrichtung 19 weist der Außenrahmen 31 der Prüfschale 18 äußere Abmessungen auf, welche es einer Bedienperson erlauben, die Prüfschale 18 beidhändig zu greifen, um diese der Ablagevorrichtung 19 durch die von der schwenkbaren Klappe 22 freigegebenen Öffnung zuzuführen. Hierzu kann der Au-βenrahmen eine Länge L von 0,4 m bis 0,6 m, insbesondere 0,5 m, und eine Breite B von 0,6 m bis 0,9 m, insbesondere 0,75 m, aufweisen.

Die Vertiefungen 33 auf der Oberfläche 32 können einen kreisrunden und/oder einen polygonalen Querschnitt aufweisen. Die Vertiefungen 33 der jeweiligen Prüfschale 18 können auch einheitlich ausgebildet sein. Die Vertiefungen 33 weisen eine Öffnungsweite im Bereich von 10 mm bis 25 mm und eine Tiefe T im Bereich von 8 mm bis 20 mm auf. Die Vertiefungen der Prüfschalen 18 können auch einheitlich ausgebildet sein. Einheitlich ausgebildet heißt dabei, dass die Prüfschalen 18 jeweils Vertiefungen 33 mit gleicher Geometrie und/oder gleicher Abmessung, d.h. Öffnungsweite und Tiefe, aufweisen. Bevorzugt kann die Prüfschale 18 einstückig ausgebildet sein, wobei der Außenrahmen 31 mit den daran befindlichen Laschen 34 und die Vertiefungen 33 durch Umformen hergestellt sind. Die Dimensionierung der Prüfschalen 18 ermöglicht es, mindestens drei Prüfschalen 18 übereinanderliegend in der Ablagevorrichtung 19 zu positionieren. Besonders bevorzugt sind bis zu fünf Prüfschalen 18 übereinanderliegend in der Ablagevorrichtung 19 angeordnet. Gelangen aus dem durch die Erntemaschine 1 aufgenommenen, bearbeiteten und wieder ausgeschiedenen Erntegut Kornbestandteile und Nichtkornbestandteilen, wie Spreu oder gehäckselte Strohbestandteile, auf die Prüfschale 18, so gleiten Strohbestandteile mit einem Durchmesser, der größer als die Öffnungsweite der Vertiefungen 33 ist, über die Vertiefungen 33 hinweg bzw. bleiben auf der Oberfläche liegen, während das kleinere Korn in die Vertiefungen 33 der Prüfschale 18 gelangt. Dabei können die Oberkanten der Vertiefungen 33 scharfkantig ausgeführt sein, um über die Prüfschale 18 gleitende Körner sicher in die Vertiefungen 33 zu geleiten.

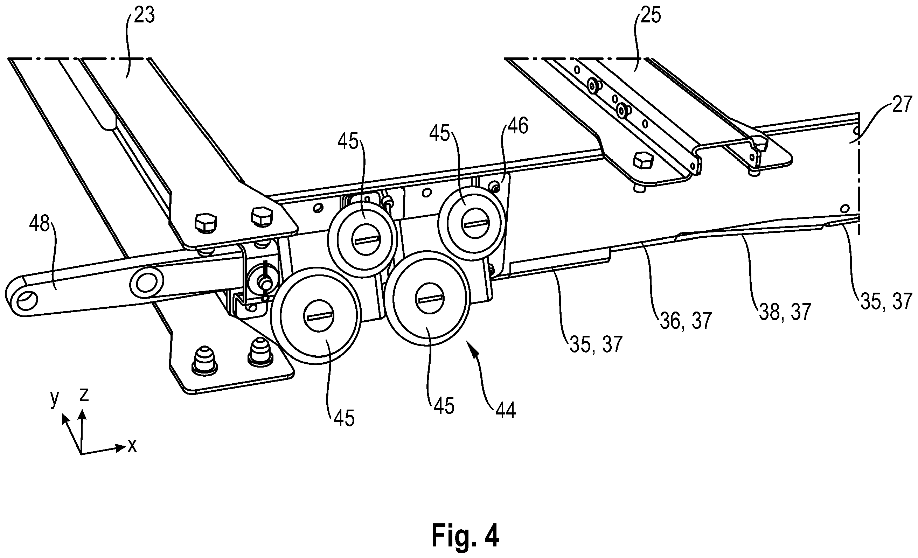

In Fig. 4 ist schematisch eine perspektivische Teilansicht der Rückwand 23 sowie einer der Auswurfschienen 27 mit daran angeordneten Führungsmitteln 44. Die jeweilige Auswurfschiene 27 ist in der parallel zu dieser verlaufenden Führungsschiene 21 durch zumindest zwei an der jeweiligen Auswurfschiene 27 angeordnete Führungsmittel 44 axial geführt. Die jeweilige Führungsschiene 21 kann vorzugsweise als ein C-Profil ausgeführt sein, wodurch die Führungsmittel 44 in Querrichtung y und Hochrichtung z gehalten werden. Die Führungsmittel 44 können Gleit- oder Rollelemente 45 aufweisen, mit denen die jeweilige Auswurfschiene 27 in der jeweiligen Führschiene 21 relativ zu dieser beweglich in Längsrichtung x geführt ist. Das jeweilige Führungsmittel 44 kann durch beispielsweise durch ein an der Auswurfschiene 27 befestigtes Hutprofil 46 zur Aufnahme der Gleit- oder Rollelemente 45 angeordnet sein, wobei die Gleit- oder Rollelemente 45 ihrerseits in der Führungsschiene 21 formschlüssig geführt bzw. beweglich sind. Anstelle des Hutprofils 46 sind auch andere Anbringungs- und Befestigungsarten der Führungsmittel 44 möglich.

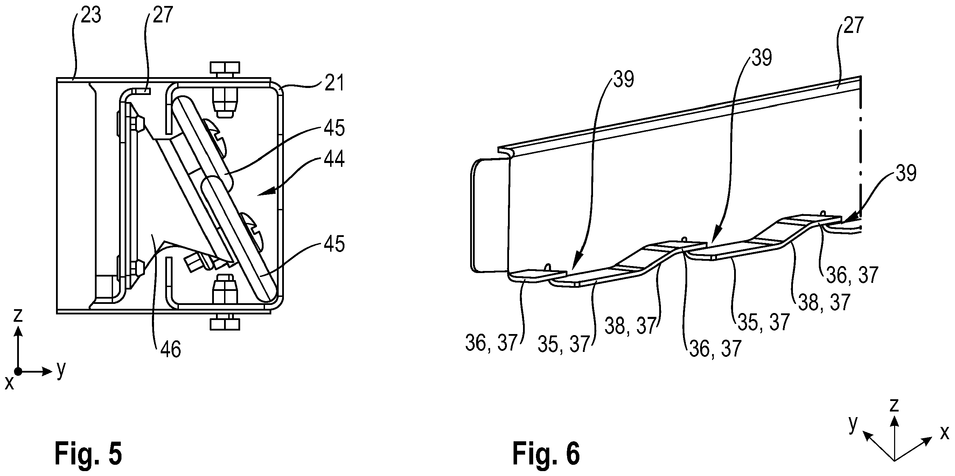

Die Darstellung in Fig. 5 zeigt schematisch eine rückwärtige Teilansicht von Rückwand 23, Auswurfschiene 27 und Führungsschiene 21 gemäß Fig. 4.

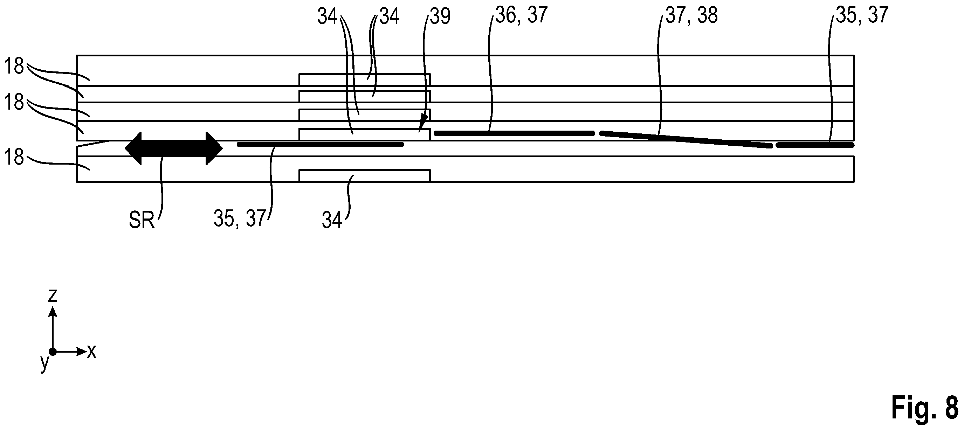

In Fig. 6 ist eine schematische Teilansicht der Innenseite einer der Auswurfschienen 27 dargestellt. In Längsrichtung x der Auswurfschiene 27 sind eine Vielzahl von in gleicher Abfolge angeordneter Abkantungen 37 vorgesehen. Die Abkantungen 37 sind als eine untere Schenkelebenen 35, eine obere Schenkelebene 36 sowie ein rampenförmiger Abschnitt 38, der die untere Schenkelebene 35 und die obere Schenkelebene 36 miteinander verbindet, ausgebildet. Die wechselweise Anordnung der Abkantungen 37 ist in Längsrichtung x der Auswurfschiene 27 gesehen symmetrisch. Zwischen den in Längsrichtung x der Auswurfschiene 27 hintereinander angeordneten Abkantungen 37 bildet sich zwischen der oberen Schenkelebene 36 einer Abkantung 37 und der unteren Schenkelebene 38 einer nachfolgenden Abkantung 37 jeweils ein Spalt 39 aus, der sich in Längsrichtung x als auch in Hochrichtung z erstreckt. Die Abkantungen 37 der jeweiligen Auswurfschiene 27 dienen der Auflage und Führung der Laschen 34 an der vereinzelten Prüfschale 18, was anhand der Fig. 8 veranschaulicht wird.

Die Darstellung in Fig. 7 zeigt schematisch eine perspektivische Teilansicht des Koppelmechanismus 28 zum Antreiben der Auswurfschienen 27. Die jeweilige Koppelstange 28 ist an der Auswurfschiene 27 endseitig befestigt. Einer der Exzenter 47 ist an einer Lagerstelle 49 im Bereich der Rückwand 23 an dem Rahmengestell 20 drehbar gelagert. Der gegenüberliegende Exzenter 47 ist mit der Antriebswelle der - in Fig. 6 nicht dargestellten - Antriebsvorrichtung 28 drehfest verbunden.

Die Darstellung in Fig. 8 zeigt eine schematische Teilansicht von mehreren übereinanderliegenden Prüfschalen 18. Dargestellt sind jeweils eine der außenseitig am Außenrahmen 31 der jeweiligen Prüfschale 18 angeordneten Laschen 34 sowie die unteren Schenkelebenen 35 und eine obere Schenkelebene 36 der Abkantungen 37.

Die Antriebsvorrichtung 26 bewirkt, wie bereits weiter oben ausgeführt, eine Vor- und Zurückbewegung der Auswurfschienen 27 in Längsrichtung der Ablagevorrichtung 19. Die Frequenz dieser oszillierenden Bewegung Vorwärts- und Zurückbewegung bestimmt die zeitlichen und somit auch räumlichen Abstände, in denen die übereinander angeordneten Prüfschalen 18 in zwei aufeinanderfolgenden Bewegungszyklen, die jeweils einer Vorwärts- und Zurückbewegung entsprechen, in der Ablagevorrichtung 19 vereinzelt und anschließend auf dem Boden 12 abgelegt werden.

Die zuunterst liegende Prüfschale 18 eines Stapels von mehreren in der Ablagevorrichtung 19 übereinanderliegenden Prüfschalen 18 liegt mit ihren Laschen 34 auf Höhe des Spalts 39. Durch die in einem ersten Bewegungszyklus ausgeführte synchrone Vorwärtsbewegung der Auswurfschienen 27 schiebt sich die jeweilige obere Schenkelebene 36 zwischen die Laschen 34 der zuunterst liegenden Prüfschale 18 und der darüber befindlichen Prüfschale 18. Dabei sind die in einer Ebene der Ablagevorrichtung 19 nebeneinanderliegenden Prüfschalen 18 durch Rahmenelemente, die Klappe 22 und die Rückwand 23 der Ablagevorrichtung 19 in axialer Richtung fixiert. Durch die im ersten Bewegungszyklus nachfolgende ausgeführte synchrone Zurückbewegung der Auswurfschienen 27 gelangt die zuunterst liegende Prüfschale 18 auf die jeweilige untere Schenkelebene 35 der Auswurfschienen 27. Mit dem Ausführen einer erneuten Vorwärtsbewegung der Auswurfschienen 27 im nachfolgenden Bewegungszyklus gleiten die Laschen 34 auf der jeweiligen unteren Schenkelebene 35 in Richtung des Spalts 39 und fallen anschließend auf den Boden 12. Zugleich wird in diesem Bewegungszyklus eine erneute Vereinzelung der in vertikaler Richtung gesehen nachfolgenden Prüfschalen 18 durchgeführt.

Wie aus der Darstellung in Fig. 1 ersichtlich ist, umfasst der Mähdrescher 2 zumindest eine Steuerungsvorrichtung 40. Mittels der Steuerungsvorrichtung 40 kann die Antriebsvorrichtung 26 angesteuert werden, um das Ablegen der Prüfschalen 18 auf dem Boden 12 zu steuern. Die Steuerungsvorrichtung 40 ermöglicht es beispielsweise, die paarweise nebeneinander abzulegenden Prüfschalen 18 in durch die Bedienperson vorgebbaren Abständen A auf dem Boden 12 abzulegen. Alternativ kann die Ablage der Prüfschalen 18 in der Ablagevorrichtung 19 automatisiert durch die Steuerungsvorrichtung 40 erfolgen. Dabei kann die Steuerungsvorrichtung 40 den zeitlichen bzw. räumlichen Abstand A zwischen der Ablage von Prüfschalen 18 vorgeben. Bevorzugt erfolgt der Abwurf der Prüfschalen 18 hintereinander in einem Abstand A von wenigen Metern. Dies kann insbesondere automatisch durch die Steuerungsvorrichtung 40 durchgeführt werden. Bei einem sehr inhomogenen Feldbestand kann es sinnvoll sein, dass die Bedienperson die Ablage der Prüfschalen 18 manuell auslöst, um die Ablage der Prüfschalen 18 an verschiedenen Stellen, d.h. sowohl mit unterschiedlichen Abständen A innerhalb einer Fahrspur hintereinander als auch verteilt über mehrere Fahrspuren, auf dem Boden 12 durchzuführen. Insbesondere im letzteren Fall ist es notwendig, die Ablageposition der manuell abgelegten Prüfschalen 18 zu bestimmen, um diese ohne großen Aufwand auf dem Feld auffinden zu können.

Hierzu kann eine Abwurfstelle der Prüfschale 18 physisch und/oder elektronisch markiert werden. Eine physische Markierung kann beispielsweise durch das Ausbringen von Schaum oder Farbe auf dem Boden 12 erfolgen. Eine elektronische Markierung kann beispielsweise durch das Abspeichern von Positionsdaten des Mähdreschers 2 im Zeitpunkt der Ablage der jeweiligen Prüfschale 18 in einer Speichereinheit der Steuervorrichtung 40 erfolgen. Die Positionsdaten können dem Mähdrescher 2 von einem Positionsortungssystem bereitgestellt werden. Zum Empfang entsprechender Positionsortungssignale kann ein Empfängermodul 41 an dem Mähdrescher 2 angeordnet sein. Vom Empfängermodul 41 gelangen die Positionsortungssignale zur Steuerungsvorrichtung 40 zur Auswertung und Abspeicherung. Zudem können die Positionsdaten an eine mobile Datenverarbeitungseinrichtung übertragen werden, wie beispielsweise ein Smartphone, ein Tablet-PC oder dergleichen. Alternativ oder zusätzlich kann jede Prüfschale 18 mit einem Sender ausgeführt sein, der beispielsweise auf Bluetooth-Basis arbeitet, dessen Signale durch eine mobile Datenverarbeitungseinrichtung detektierbar sind, um die Lage der jeweiligen Prüfschale 18 zu orten. Ebenfalls denkbar sind optische Signalgeber an den Prüfschalen 18.

Zur Einstellung des Abstands A bzw. eines Auslösezeitpunktes für die paarweise Ablage der Prüfschalen 18 an verschiedenen Stellen auf dem Boden ist eine Eingabe-Ausgabe-einheit 43 vorgesehen, die mit der Steuerungsvorrichtung 40 in Verbindung steht. Durch die Eingabe-Ausgabeeinheit 43 kann die Bedienperson des Mähdreschers 2 den Abstand A einstellen, in welchem die Prüfschalen 18 abgelegt werden. Ebenfalls kann die Bedienperson durch die Eingabe-Ausgabeeinheit 43 den Auslösezeitpunkt für das Ablegen manuell ansteuern.

Die Ablagevorrichtung 19 kann zumindest einen Sensor 42 umfassen, welcher der Detektion des Vorhandenseins der Prüfschalen 18 dient. Mittels des zumindest einen Sensors 42 lässt sich zumindest die Anzahl der Prüfschalen 18 in der Ablagevorrichtung 19 bestimmen. Hierzu kann der Sensor 42 in der Rückwand 23 des Rahmengestells 20 der Ablagevorrichtung 19 angeordnet sein. Der zumindest eine Sensor 42 überträgt entsprechende Signale an die Steuervorrichtung 40 zur Auswertung und Anzeige mittels der Eingabe-Ausgabeeinheit 43.

An den gutabgabeseitigen Enden der Abscheideanordnung 6 sowie der Reinigungsanordnung 7 ist jeweils zumindest ein Kornverlustsensor 17 angeordnet ist, welcher Sensor-Kornverlustsignale an die Steuerungsvorrichtung 40 zur relativen Bestimmung von Erntegutverlusten übermitteln. Die Sensor-Kornverlustsignale werden von der Steuerungsvorrichtung 40 und/oder zumindest einer zusätzlichen Steuereinheit des Mähdreschers 2 für die Einstellung von Betriebsparametern der Arbeitsorgane, d.h. insbesondere der Dreschanordnung 5, der Abscheideanordnung 6 sowie der Reinigungsanordnung 7, sowie der Fahrgeschwindigkeit des Mähdreschers 2 als ein Betriebsparameter während des Ernteprozesses. Die Einstellung der Betriebsparameter orientiert sich dabei unter anderem an dem Kriterium Erntegutverluste, die einen vorgebbaren Grenzwert nicht überschreiten sollen.

Für eine möglichst hohe Genauigkeit der Erfassung von Erntegutverlusten durch die Kornverlustsensoren 17 ist es erforderlich, diese zu Beginn des Ernteprozesses auf einem Feld zu kalibrieren. Hierzu kann die Steuerungsvorrichtung 40 dazu eingerichtet sein, für eine Durchführung einer Kalibrierung der Kornverlustsensoren 17 die Ablagevorrichtung 19 zur automatischen Ablage der Prüfschalen 18 auf dem Boden 12 anzusteuern und die Ablage der Prüfschalen 18 in Abhängigkeit vom Erreichen eines quasistationären Betriebszustands der Erntemaschine 1 vorzunehmen, in welchem die Erntemaschine 1 einen im Wesentlichen konstanten Durchsatz an Erntegut aufweist.

Für die Durchführung der Kalibrierung der Kornverlustsensoren 17 werden die tatsächlich auftretenden Erntegutverluste 16 bzw. Kornverluste anhand einer durchzuführenden Auswertung des Inhalts der von der Erntemaschine 1 abgelegten und überfahrenen Prüfschalen 18 bestimmt.

Hierfür ist die Steuerungsvorrichtung 40 dazu eingerichtet, eine Änderung von Betriebsparametern nach Erreichen des quasistationären Betriebszustands für die Dauer der Ablage der Prüfschalen 18 zu unterbinden und mittels der Eingabe-Ausgabeeinheit 43 einen Hinweis auszugeben, dass durch die Steuerungsvorrichtung 40 eine Änderung der Betriebsparameter temporär verhindert wird. Auf diese Weise kann vermieden werden, dass eine Änderung eines oder mehrerer Betriebsparameter zu einer Abweichung der Bestimmung tatsächlichen Erntegutverluste mittels der Prüfschalen 18 führen. Betriebsparameter sind, wie bereits ausgeführt, beispielsweise die Fahrgeschwindigkeit der Erntemaschine 1 sowie insbesondere automatische oder manuelle Einstellungen der Dreschanordnung 5, der Abscheideanordnung 6 und/oder der Reinigungsanordnung 7, die zu einer Änderung des Erntegutdurchsatzes und/oder einer Erhöhung der Erntegutverluste 16 führen können.

### Bezugszeichenliste

| | | | |
|---|---|---|---|
| 1 | Erntemaschine | 33 | Vertiefung |
| 2 | Mähdrescher | 34 | Lasche |
| 3 | Schneidwerk | 35 | Untere Schenkelebene |
| 4 | Schrägförderer | 36 | Obere Schenkelebene |
| 5 | Dreschanordnung | 37 | Abkantung |
| 6 | Abscheideanordnung | 38 | Abschnitt |
| 7 | Reinigungsanordnung | 39 | Spalt |
| 8 | Transportanordnung | 40 | Steuerungsvorrichtung |
| 9 | Korntank | 41 | Empfängermodul |
| 10 | Verteilanordnung | 42 | Sensor |
| 11 | Erntegutstrom | 43 | Eingabe-Ausgabeeinheit |
| 12 | Boden | 44 | Führungsmittel |
| 13 | Gutgemisch | 45 | Gleit- oder Rollelement |
| 14 | Strohhäcksler | 46 | Hutprofil |
| 15 | Radialverteiler | 47 | Exzenter |
| 16 | Erntegutverlust | 48 | Koppelstange |
| 17 | Kornverlustsensor | 49 | Lagerstelle |
| 18 | Prüfschale | | |
| 19 | Ablagevorrichtung | A | Abstand |
| 20 | Rahmengestell | SR | Bewegungsrichtung |
| 21 | Führungsschiene | x | Längsrichtung |
| 22 | Klappe | y | Querrichtung |
| 23 | Rückwand | Z | Hochrichtung |
| 24 | Achse | | |
| 25 | Querstrebe | | |
| 26 | Antriebsvorrichtung | | |
| 27 | Auswurfschiene | | |
| 28 | Koppelmechanismus | | |
| 29 | Achse | | |
| 30 | Betätigungselement | | |
| 31 | Außenrahmen | | |
| 32 | Oberfläche | | |

## Patentansprüche

1. Erntemaschine (1), insbesondere Mähdrescher (2), umfassend eine Ablagevorrichtung (19) mit einem Auswurfmechanismus zur Ablage einer Prüfschale (18) zur Bestimmung von Erntegutverlusten (16) auf dem von der Erntemaschine (1) überfahrenen Boden (12), **dadurch gekennzeichnet, dass** der Auswurfmechanismus dazu eingerichtet ist, jeweils zwei Prüfschalen (18) aus zwei nebeneinander in der Ablagevorrichtung (19) angeordneten Stapeln von Prüfschalen (18) gleichzeitig auf dem Boden (12) abzulegen und dass der Auswurfmechanismus ein Rahmengestell (20) aufweist, welches zur übereinander gestapelten Aufnahme von zumindest zwei Paaren Prüfschalen (18) eingerichtet ist.

2. Erntemaschine (1) nach Anspruch 1, **dadurch gekennzeichnet, dass** die Erntemaschine (1) eine Steuerungsvorrichtung (40) aufweist, die dazu eingerichtet ist, die Ablagevorrichtung (19) zur gleichzeitigen paarweisen Ablage von Prüfschalen (18) in vorbestimmten oder vorgebbaren Abständen (A) anzusteuern.

3. Erntemaschine (1) nach Anspruch 1, **dadurch gekennzeichnet, dass** das Rahmengestell (20) einander gegenüberliegend angeordnete Führungsschienen (21) sowie parallel und relativbeweglich zu den Führungsschienen (21) angeordnete Auswurfschienen (27) umfasst, wobei die Auswurfschienen (27) zur Führung und Vereinzelung der Prüfschalen (18) durch zumindest eine Antriebsvorrichtung (26) oszillierend angetrieben sind.

4. Erntemaschine (1) nach Anspruch 3, **dadurch gekennzeichnet, dass** an einander zugewandten vertikal verlaufenden Innenseiten der Auswurfschienen (27) mehrere sich in Querrichtung (y) erstreckende Abkantungen (37) ausgebildet sind, wobei jede Abkantung (37) eine untere Schenkelebene (35) und eine obere Schenkelebene (36) aufweist, die durch einen rampenförmigen Abschnitt (38) miteinander verbunden sind, und dass zwischen in Längsrichtung (x) der Auswurfschienen (27) hintereinander angeordneten Abkantungen (37) sich zwischen der oberen Schenkelebene (36) einer Abkantung (37) und der unteren Schenkelebene (35) einer nachfolgenden Abkantung (37) jeweils ein Spalt (39) ausbildet.

5. Erntemaschine (1) nach Anspruch 4, **dadurch gekennzeichnet, dass** die jeweilige Prüfschale (18) beidseitig an einem Außenrahmen (31) angeordnete Laschen (34) aufweist, wobei die Laschen (34) der innerhalb eines Stapels zuunterst liegenden Prüfschale (18) während einer oszillierenden Bewegung der Auswurfschienen (27) in Längsrichtung (x) auf den Abkantungen (37) der Auswurfschienen (27) aufliegen und von diesen geführt sind.

6. Erntemaschine (1) nach einem der Ansprüche 3 bis 5, **dadurch gekennzeichnet, dass** die Auswurfschienen (27) durch einen Koppelmechanismus (28) mit der Antriebsvorrichtung (26) verbunden sind, um die oszillierende Bewegung der Auswurfschienen (27) zu synchronisieren.

7. Erntemaschine (1) nach einem der Ansprüche 3 bis 6, **dadurch gekennzeichnet, dass** die jeweilige Auswurfschiene (27) in der parallel zu dieser verlaufenden Führungsschiene (21) durch zumindest zwei an der jeweiligen Auswurfschiene (27) angeordnete Führungsmittel (44) axial geführt ist.

8. Erntemaschine (1) nach einem der vorangehenden Ansprüchen, **dadurch gekennzeichnet, dass** eine Abwurfstelle der paarweise abgelegten Prüfschalen (18) physisch und/oder elektronisch markierbar ist.

9. Erntemaschine (1) nach einem der vorangehenden Ansprüchen, **dadurch gekennzeichnet, dass** die Erntemaschine (1) eine Abscheideanordnung (6) sowie eine Reinigungsanordnung (7) aufweist, wobei an den gutabgabeseitigen Enden der Abscheideanordnung (6) sowie der Reinigungsanordnung (7) jeweils zumindest ein Kornverlustsensor (17) angeordnet ist, welche Sensor-Kornverlustsignale an die Steuerungsvorrichtung (40) zur relativen Bestimmung von Erntegutverlusten übermitteln.

10. Erntemaschine (1) nach einem der vorangehenden Ansprüchen, **dadurch gekennzeichnet, dass** die Steuerungsvorrichtung (40) dazu eingerichtet ist, für eine Durchführung einer Kalibrierung der Kornverlustsensoren (17) die Ablagevorrichtung (19) zur automatischen Ablage der Prüfschalen (18) auf dem Boden (12) anzusteuern und die Ablage der Prüfschalen (18) in Abhängigkeit vom Erreichen eines quasistationären Betriebszustands der Erntemaschine (1) vorzunehmen, in welchem die Erntemaschine (1) einen im Wesentlichen konstanten Durchsatz an Erntegut aufweist.

11. Erntemaschine (1) nach Anspruch 10, **dadurch gekennzeichnet, dass** die Steuerungsvorrichtung (40) dazu eingerichtet ist, eine Änderung von Betriebsparametern nach Erreichen des quasistationären Betriebszustands für die Dauer der Ablage der Prüfschalen (18) zu unterbinden und mittels einer Eingabe-Ausgabeeinheit (43) einen Hinweis auszugeben, dass eine Änderung der Betriebsparameter temporär verhindert wird.

12. Erntemaschine (1) nach einem der vorangehenden Ansprüche, **dadurch gekennzeichnet, dass** die Steuerungsvorrichtung (40) dazu eingerichtet ist, die von den Kornverlustsensoren (17) erfassten Sensor-Kornverlustsignale im Zeitpunkt der jeweiligen Ablage der Prüfschalen (18) abzuspeichern.

13. Erntemaschine (1) nach einem der vorangehenden Ansprüche, **dadurch gekennzeichnet, dass** die Einstellung der Empfindlichkeit der Kornverlustsensoren (17) nach Empfang der tatsächlichen Erntegutverluste manuell oder automatisch die Steuerungsvorrichtung (40) durchführbar ist.

14. Erntemaschine (1) nach Anspruch 13, **dadurch gekennzeichnet, dass** die mittels der Verwendung der Prüfschalen (18) bestimmten tatsächlichen Erntegutverluste manuell mittels der Eingabe-Ausgabe-Einheit (43) oder von einer, insbesondere mobilen, Datenverarbeitungsvorrichtung an die Steuerungsvorrichtung (40) übermittelt werden.

## Claims

1. A harvesting machine (1), in particular a combine harvester (2), comprising a depositing device (19) with an ejection mechanism for depositing a test pan (18) for determining harvested material losses (16) on the ground (12) over which the harvesting machine (1) travels, **characterized in that** the ejection mechanism is configured so as to simultaneously deposit respectively two test pans (18) from two stacks of test pans (18) disposed adjacent to one another in the depositing device (19) on the ground (12), and **in that** the ejection mechanism has a framework (20) which is configured to receive at least two pairs of test pans (18) stacked one on top of the other.

2. The harvesting machine (1) according to claim 1, **characterized in that** the harvesting machine (1) has a control device (40) which is configured so as to control the depositing device (19) in order to simultaneously deposit test pans (18) in pairs at predetermined or specifiable separations (A).

3. The harvesting machine (1) according to claim 1, **characterized in that** the framework (20) comprises guide rails (21) disposed opposite one another as well as ejection rails (27) disposed parallel to and movable relative to the guide rails (21), wherein the ejection rails (27) are driven in oscillation by at least one drive device (26) in order to guide and separate the test pans (18).

4. The harvesting machine (1) according to claim 3, **characterized in that** a plurality of bent edges (37) extending in the transverse (y) direction are formed on mutually facing vertically extending inner sides of the ejection rails (27), wherein each bent edge (37) has a lower flat shank (35) and an upper flat shank (36) which are connected together by a section (38) in the form of a ramp, and **in that** between bent edges (37) which are disposed one behind the other in the longitudinal (x) direction of the ejection rails (27), a respective gap (39) is formed between the upper flat shank (36) of one bent edge (37) and the lower flat shank (35) of a subsequent bent edge (37).

5. The harvesting machine (1) according to claim 4, **characterized in that** the respective test pan (18) has lugs (34) disposed on both sides on an outer frame (31), wherein the lugs (34) of the lowermost test pan (18) within a stack lie on the bent edges (37) of the ejection rails (27) during an oscillating movement of the ejection rails (27) in the longitudinal (x) direction and are guided thereby.

6. The harvesting machine (1) according to one of claims 3 to 5, **characterized in that** the ejection rails (27) are connected to the drive device (26) by a coupling mechanism (28) in order to synchronise the oscillating movement of the ejection rails (27).

7. The harvesting machine (1) according to one of claims 3 to 6, **characterized in that** the respective ejection rail (27) is axially guided in the guide rail (21) extending parallel thereto by at least two guide means (44) disposed on the respective ejection rail (27).

8. The harvesting machine (1) according to one of the preceding claims, **characterized in that** an ejection position for the test pans (18) which are deposited in pairs can be physically and/or electronically marked.

9. The harvesting machine (1) according to one of the preceding claims, **characterized in that** the harvesting machine (1) has a separating assembly (6) as well as a cleaning assembly (7), wherein at least one grain loss sensor (17) is respectively disposed on the material discharge ends of the separating assembly (6) as well as of the cleaning assembly (7), which transmits sensor grain loss signals to the control device (40) for the relative determination of harvested material losses.

10. The harvesting machine (1) according to one of the preceding claims, **characterized in that**, in order to carry out a calibration of the grain loss sensors (17), the control device (40) is configured to control the depositing device (19) for automatically depositing the test pans (18) on the ground (12) and to carry out the deposition of the test pans (18) subject to reaching a quasi-stationary operational state of the harvesting machine (1) in which the harvesting machine (1) has a substantially constant throughput of harvested material.

11. The harvesting machine (1) according to claim 10, **characterized in that** the control device (40) is configured so as to prevent a change in the operating parameters after reaching the quasi-stationary operational state for the period of time for depositing the test pans (18) and to output an indication by means of an input/output unit (43) that a change in the operating parameters is temporarily prevented.

12. The harvesting machine (1) according to one of the preceding claims, **characterized in that** the control device (40) is configured to store the sensor grain loss signals acquired from the grain loss sensors at the time of the respective depositing of the test pans (18).

13. The harvesting machine (1) according to one of the preceding claims, **characterized in that** the adjustment of the sensitivity of the grain loss sensors (17) can be carried out manually, or automatically by the control device (40) after receiving the actual harvested material losses.

14. The harvesting machine (1) according to claim 13, **characterized in that** the actual harvested material losses determined using the test pans (18) are transmitted to the control device (40) manually by means of the input/output unit (43) or from a data processing device, in particular a mobile data processing device.

## Revendications

1. Machine de récolte (1), en particulier moissonneuse-batteuse (2), comprenant un dispositif de dépôt (19) doté d'un mécanisme d'éjection pour le dépôt d'un collecteur de grains (18) en vue de déterminer des pertes de récolte (16), sur le sol (12) sur lequel se déplace la machine de récolte (1), **caractérisée en ce que** le mécanisme d'éjection est conçu pour déposer simultanément sur le sol (12) deux collecteurs de grains (18) à partir de deux piles de collecteurs de grains (18) disposés l'un à côté de l'autre dans le dispositif de dépôt (19), et **en ce que** le mécanisme d'éjection présente un châssis (20) qui est conçu pour accueillir des piles superposées d'au moins deux paires de collecteurs de grains (18).

2. Machine de récolte (1) selon la revendication 1, **caractérisée en ce que** la machine de récolte (1) présente un dispositif de commande (40) qui est conçu pour activer le dispositif de dépôt (19) afin qu'il dépose simultanément par paires des collecteurs de grains (18), à des distances prédéfinies ou pouvant être prédéterminées.

3. Machine de récolte (1) selon la revendication 1, **caractérisée en ce que** le châssis (20) comprend des rails de guidage (21) disposés en vis-à-vis l'un de l'autre, ainsi que des rails d'éjection (27) disposés parallèlement aux rails de guidage (21) et avec possibilité de déplacement par rapport à ceux-ci, les rails d'éjection (27) étant entraînés de manière oscillante par au moins un dispositif d'entraînement (26), en vue du guidage et du prélèvement individuel des collecteurs de grains (18).

4. Machine de récolte (1) selon la revendication 3, **caractérisée en ce que** plusieurs parties pliées (37), s'étendant dans la direction transversale (y), sont réalisées sur des faces internes verticales, tournées l'une vers l'autre, des rails d'éjection (27), chaque partie pliée (37) présentant un plan d'aile inférieur (35) et un plan d'aile supérieur (36), qui sont reliés entre eux par une partie (38) en forme de rampe, et **en ce qu'**un espace (39) se forme respectivement entre le plan d'aile supérieur (36) d'une partie pliée (37) et le plan d'ail inférieur (35) de la partie pliée (37) suivante, entre des parties pliées (37) disposées les unes à la suite des autres dans la direction longitudinale (x) des rails d'éjection (27).

5. Machine de récolte (1) selon la revendication 4, **caractérisée en ce que** le collecteur de grains (18) respectif présente des pattes (34) disposées de part et d'autre sur un cadre extérieur (31), les pattes (34) du collecteur de grains (18) situé tout en bas d'une pile reposant sur les parties pliées (37) des rails d'éjection (27) pendant un mouvement oscillant des rails d'éjection (27) dans la direction longitudinale (x), et étant guidées par ceux-ci.

6. Machine de récolte (1) selon une des revendications 3 à 5, **caractérisée en ce que** les rails d'éjection (27) sont reliés au dispositif d'entraînement (26) par un mécanisme d'accouplement (28), aux fins de synchroniser le mouvement oscillant des rails d'éjection (27).

7. Machine de récolte (1) selon une des revendications 3 à 6, **caractérisée en ce que** le rail d'éjection (27) respectif est guidé axialement dans le rail de guidage (21) qui s'étend parallèlement à celui-ci, par au moins deux moyens de guidage (44) disposés sur le rail d'éjection (27) respectif.

8. Machine de récolte (1) selon une des revendications précédentes, **caractérisée en ce qu'**un point d'éjection des collecteurs de grains (18) déposés par paires peut être marqué physiquement et/ou électroniquement.

9. Machine de récolte (1) selon une des revendications précédentes, **caractérisée en ce que** la machine de récolte (1) présente un dispositif séparateur (6) ainsi qu'un dispositif nettoyeur (7), sachant qu'aux extrémités, côté sortie des produits, du dispositif séparateur (6) et du dispositif nettoyeur (7), il est prévu respectivement au moins un détecteur de perte de grains (17) qui transmet des signaux de détecteur de perte de grains au dispositif de commande (40), en vue de la détermination relative de pertes de récolte.

10. Machine de récolte (1) selon une des revendications précédentes, **caractérisée en ce que** le dispositif de commande (40) est conçu pour activer le dispositif de dépôt (19) en vue du dépôt automatique des collecteurs de grains (18) sur le sol (12), aux fins de réaliser un étalonnage des détecteurs de perte de grains (17), et pour procéder au dépôt des collecteurs de grains (18) en fonction du fait qu'un état de fonctionnement quasi-stationnaire de la machine de récolte (1) est atteint, dans lequel la machine de récolte (1) présente un débit de récolte sensiblement constant.

11. Machine de récolte (1) selon la revendication 10, **caractérisée en ce que** le dispositif de commande (40) est conçu pour empêcher une modification de paramètres de fonctionnement pendant la durée du dépôt des collecteurs de grains (18), après que l'état de fonctionnement quasi-stationnaire est atteint, et pour émettre, à l'aide d'une unité d'entrée-sortie (43), une indication signalant qu'une modification des paramètres de fonctionnement est temporairement empêchée.

12. Machine de récolte (1) selon une des revendications précédentes, **caractérisée en ce que** le dispositif de commande (40) est conçu pour mémoriser les signaux de détecteur de perte de grains recueillis par les détecteurs de perte de grains (17), à l'instant du dépôt respectif des collecteurs de grains (18).

13. Machine de récolte (1) selon une des revendications précédentes, **caractérisée en ce que** le réglage de la sensibilité des détecteurs de perte de grains (17) peut être effectué manuellement ou de manière automatique par le dispositif de commande (40), après réception des pertes de récolte réelles.

14. Machine de récolte (1) selon la revendication 13, **caractérisée en ce que** les pertes de récolte réelles déterminées grâce à l'utilisation des collecteurs de grains (18) sont transmises au dispositif de commande (40) manuellement, au moyen de l'unité d'entrée-sortie (43), ou par un dispositif de traitement de données, notamment mobile.
